# EUROPEAN PATENT APPLICATION

(11) **EP 4 838 450 A1**
(43) Date of publication of application: **11.11.2026**
(21) Application number: 24915265.3
(22) Date of filing: 31.12.2024
(51) Int. Cl.: G06Q 30/0601, G06F 3/0482, G06F 3/04842, G06F 3/04883

(54) **INTELLIGENT INTERACTION METHOD AND ELECTRONIC DEVICE**

(30) Priority: 05.01.2024 CN 202410021667
(71) Applicant: Hangzhou Alibaba International Internet Industry Co., Ltd., Hangzhou, Zhejiang 310052 (CN)
(72) Inventor: DONG, Hui, Hangzhou, Zhejiang 311121 (CN); CHENG, Siqi, Hangzhou, Zhejiang 311121 (CN)
(74) Representative: Wu, Ting
(86) International application number: PCT/CN2024/144642
(87) International publication number: WO 2025/146051

(57) **Abstract**

Embodiments of the present disclosure disclose an intelligent interaction method and electronic device, the method comprising: during the display of a current page, detecting a shopping need that a user may currently have, based at least on a function provided by the current page and/or behavior data generated by the user on the current page; after detecting a target shopping need that the user may currently have, generating prompt text for conducting a dialogue with an artificial intelligence (AI) content generation model based on the target shopping need; and invoking a pre-trained AI content generation model based on the prompt text to generate target content corresponding to the target shopping need and displaying the target content. Through embodiments of the present disclosure, it is possible to intelligently and dynamically provide solutions corresponding to shopping needs based on the results of user shopping need detection, thereby improving the efficiency of information retrieval by users.

## Description

This disclosure claims priority to the Chinese patent application filed with the China National Intellectual Property Administration on January 5, 2024, with application number 202410021667.3 and application title "Intelligent Interaction Method and Electronic Device", the entire contents of which are incorporated herein by reference.

### TECHNICAL FIELD

The present disclosure relates to the field of information processing technology, and more particularly to an intelligent interaction method and electronic device.

### BACKGROUND

A product information service system (commonly referred to as an e-commerce platform), as a centralized traffic scenario, needs to provide comprehensive shopping guidance service capabilities to address the shopping needs of various users. For example, users' shopping needs include having a clear shopping target, having only a clear shopping scope, seeking product consultation, and more. However, in current e-commerce platforms, users need to search or browse recommendation lists on the home page to find products that meet their needs, then enter the product detail page to view details, and then decide whether to purchase, and so on. The entire process requires multi-level operations to obtain more information, requiring users to spend a great deal of time on product searching and shopping guidance browsing, resulting in very low efficiency.

### SUMMARY

The present disclosure provides an intelligent interaction method and electronic device, capable of intelligently and dynamically providing solutions corresponding to shopping needs based on the results of user shopping need detection, thereby improving the efficiency of users' information retrieval.

The present disclosure provides the following solutions:
An intelligent interaction method, the method comprising:
during the display of a current page, detecting a user's current potential shopping need based on at least a function provided by the current page and/or behavior data generated by the user on the current page;
after detecting a target shopping need that the user currently may have, generating prompt text for conducting a dialogue with an artificial intelligence (AI) content generation model based on the target shopping need;
invoking a pre-trained AI content generation model based on the prompt text, so as to generate target content corresponding to the target shopping need and display the target content.

The method is applied to an artificial intelligence AI interaction module, and the AI interaction module is configured to be embedded into any page.

The AI interaction module exists in the form of a software development kit (SDK), so as to embed the AI interaction module into any page via the SDK.

The page comprises pages corresponding to multiple nodes on the shopping guidance chain in a product information service system.

The AI interaction module corresponds to a page element configured to be displayed in the target page, where, when the shopping need is not detected, the page element is in a collapsed or hidden state, and after the shopping need is detected, the page element is in an expanded or displayed state, so as to interact with the AI interaction module through the page element.

The method further comprises:
after detecting the target shopping need, providing an operation option for confirming the target shopping need in the target page element, so that after receiving a confirmation message from the user, prompt text for conducting a dialogue with the artificial intelligence AI content generation model is generated based on the target shopping need.

The generated prompt text comprises multiple items, and the method further comprises:
providing operation options for selecting among multiple prompt texts in the target page element, so that after receiving the prompt text selected by the user, an invocation is initiated to the AI content generation model.

Here, when detecting the need that the user may currently have, information relied upon further includes: asset information of the user within the product information service system, marketing campaign information published in the product information service system, marketing campaign information associated with products, and shopping preference information of the user.

Here, the function provided by the current page includes: providing product recommendation information;
the detecting the need that the user may currently have based at least on the function provided by the current page and/or behavior data generated by the user on the current page, comprises:
determining, based on behavior data generated by the user on the page containing the product recommendation information feed, whether the user has a clear target shopping product or a clear target shopping scope, and detecting the need that the user may potentially have based on the determination result.

Here, the function provided by the current page includes: providing product search information;
the detecting the need that the user may currently have based at least on the function provided by the current page and/or behavior data generated by the user on the current page, comprises:
determining, based on product search condition information entered by the user on the current page, whether the user has a clear target shopping product or a clear target shopping scope, and detecting the need that the user may potentially have based on the determination result.

Here, the detecting the need that the user may potentially have based on the determination result comprises:
if it is determined that the user has a clear target shopping product, determining the user's target shopping need as product-dimension-based information provision and/or decision-assistance content, so that by generating corresponding prompt text, the AI content generation model generates product-dimension-based information provision and/or decision-assistance content.

Here, the product-dimension-based information provision and/or decision-assistance content comprises: comparison among same-model products provided by different merchants across multiple dimensions and/or product recommendation information.

Here, the detecting the need that the user may potentially have based on the determination result comprises:
if it is determined that the user has a clear target shopping scope and the target scope is related to a target scene, determining the user's target shopping need as target-scene-based shopping guidance, so that by generating corresponding prompt text, the AI content generation model generates shopping-list-form product recommendation information aggregated by the target scene.

Here, when providing the shopping-list-form product recommendation information, the AI content generation model is further configured to generate an ambient background image corresponding to the target scene.

Here, the detecting the need that the user may potentially have based on the determination result comprises:
if it is determined that the user has a clear target shopping scope and the target scope includes multiple different products under a target category, determining the user's target shopping need as purchasing products of the target category or comparing the multiple different products, so that by generating corresponding prompt text, the AI content generation model generates product recommendation information regarding the target category, or, compares the multiple different products across multiple dimensions and/or generates recommendation information.

Here, the detecting the needs that the user may potentially have based on the determination result comprises:
if it is determined that the user has no clear shopping target, determining based on the user's historical behavior data whether the user has a clear shopping driving factor; if so, determining the user's target shopping need as information related to the shopping driving factor, so that by generating corresponding prompt text, the AI content generation model generates content aggregated by the shopping driving factor.

Here, the function provided by the current page includes: providing detailed information about a target product;
the detecting the need that the user may currently have based at least on the function provided by the current page and/or behavior data generated by the user on the current page, comprises:
if the user's dwell time on the current page exceeds a threshold or the user scrolls through multiple screens, but has not performed an operation of adding to the to-be-settled product set or a purchase operation, determining the user's target shopping need as obtaining more comprehensive information about the target product, or obtaining effect information of the target product in a desired usage scene, so that by generating corresponding prompt text, the AI content generation model summarizes the detailed information of the target product and generates summarized text, or, after the user provides a relevant image of the usage scene, generates a usage effect image of simulating the target product into the usage scene.

Here, the function provided by the current page includes: providing product list information of products that the user has added to the to-be-settled product set;
the detecting the need that the user may currently have based at least on the function provided by the current page and/or behavior data generated by the user on the current page, comprises:
determining, based on the products in the to-be-settled product set, whether the user has a need to obtain price change information of products in the to-be-settled product set, to add more products to the to-be-settled product set to satisfy the usage conditions of a certain user entitlement, or to obtain associated product recommendations for products in the to-be-settled product set, so that by generating corresponding prompt text, the AI content generation model moves products with price changes to a prominent position on the current page for display, or provides product recommendation information for products that satisfy the usage conditions or belong to associated products.

An intelligent interaction apparatus, comprises:
a need detection unit, configured to, during the display of a current page, detect a shopping need that the user may currently have based at least on the functions provided by the current page and/or behavior data generated by the user on the current page;
a prompt text generation unit, configured to, after detecting a target shopping need that a user may currently have, generate prompt text for conducting a dialogue with an artificial intelligence (AI) content generation model based on the target shopping need;
a content generation unit, configured to invoke a pre-trained AI content generation model based on the prompt text, so as to generate target content corresponding to the target shopping need and display the target content.

A computer-readable storage medium having a computer program stored thereon, the computer program, when executed by a processor, implementing the steps of any one of the foregoing methods.

An electronic device, comprising:
one or more processors; and
a memory associated with the one or more processors, the memory configured to store program instructions that, when read and executed by the one or more processors, implement the steps of any one of the foregoing methods.

A computer program product, comprising a computer program that, when executed by a processor, implements the steps of any one of the foregoing methods.

According to the specific embodiments provided by the present disclosure, the present disclosure discloses the following technical effects:
Through the embodiments of the present disclosure, during the display of a current page, the user's current potential shopping need may be detected based on the function provided by the current page and/or behavior data generated by the user on the current page, after detecting the target shopping need that the user may currently have, prompt text for conducting a dialogue with an AI (Artificial Intelligence) content generation model may be generated based on the target shopping need, and thereafter, the pre-trained AI content generation model may be invoked based on the prompt text to generate target content corresponding to the target shopping need and display it. In this way, since the target shopping need that the user may have can be detected, and prompt text can be automatically generated based on the detected target shopping need to generate content for resolving the corresponding issue, this constitutes a demand-responsive proactively reaching AI interaction mode. In this mode, the user is not required to initiate interaction with the AI; instead, the AI interaction module proactively initiates the interaction and can automatically construct prompt text for conducting a dialogue with the AI model, thereby reducing the difficulty and barrier for users to interact with the AI and contributing to an improved user experience. Moreover, based on different user shopping need detection results, solutions corresponding to the shopping needs can be intelligently and dynamically provided, so as to flexibly adapt to diverse user needs and scenarios and improve users' information retrieval efficiency.

In an optional implementation, an AI interaction module may be provided in the form of a software development kit (SDK) or the like, and the AI interaction module may be embedded into a variety of different pages, for example, pages corresponding to multiple nodes on the shopping guidance chain in the product information service system, and so on, so that the AI interaction module is decoupled from specific pages, thereby facilitating the provision of a unified interaction experience across different scenario pages for users.

In addition, this approach is more friendly and convenient for user groups such as new users who are unfamiliar with operating e-commerce systems. Furthermore, by providing support for interaction modalities such as voice, gesture, and video, a more friendly experience can also be provided for user groups such as visually impaired users.

Of course, implementing any product of the present disclosure does not necessarily require achieving all of the advantages described above.

### BRIEF DESCRIPTION OF THE DRAWINGS

In order to more clearly illustrate the technical solutions in the embodiments of the present disclosure or in the prior art, the drawings required for use in the embodiments will be briefly described below. Obviously, the drawings described below are merely some embodiments of the present disclosure, and a person of ordinary skill in the art can obtain other drawings based on these drawings without creative effort.
FIG. 1 is a schematic diagram of a system architecture provided by an embodiment of the present disclosure;
FIG. 2 is a flowchart of a method provided by an embodiment of the present disclosure;
FIG. 3 to FIG. 6 are schematic diagrams of user interfaces provided by embodiments of the present disclosure;
FIG. 7 is a schematic diagram of an electronic device provided by an embodiment of the present disclosure.

### DETAILED DESCRIPTION OF THE EMBODIMENTS

The technical solutions in the embodiments of the present disclosure will be described clearly and completely below with reference to the drawings in the embodiments of the present disclosure. Obviously, the described embodiments are only some embodiments of the present disclosure, not all embodiments. Based on the embodiments of the present disclosure, all other embodiments obtained by a person of ordinary skill in the art shall fall within the scope of protection of the present disclosure.

In the embodiments of the present disclosure, Artificial Intelligence Generated Content (AIGC) technology may be utilized to help users of a product information service system improve the efficiency of obtaining information. Here, the so-called AIGC refers to using an AI content generation model to produce content, including text, images, videos, and so on. Driven by the wave of large AI models, AI has rapidly advanced in areas such as natural language processing and complex scene understanding, and combined with massive datasets and algorithm model optimization, has established a relatively solid underlying foundation in practical deployment scenarios. The embodiments of the present disclosure, against this background, provide an application approach for AI in e-commerce scenarios.

It should be noted that some application systems have already proposed implementations for applying large AI models to e-commerce scenarios; however, there are still some issues in specific implementations. For example, in existing application approaches, a permanent fixed interaction entry point is typically provided within a specific page, and during the process of browsing that page, users can enter the AI interaction page through that entry point at any time, after which they can conduct a dialogue with the AI by posing questions, and accordingly, the AI can generate corresponding content in response to the questions raised by the users.

The problems with the above-described implementations include at least:
Users are required to proactively initiate interaction with the AI and to formulate their own questions to the AI. However, in practical applications, users may find it difficult to recognize whether AI assistance is available, or when to initiate interaction with the AI, and how to pose questions to the AI may be relatively difficult for many users. In particular, regarding how to pose questions to the AI, many users face situations where they do not know how to ask, that is, users find it relatively difficult to clearly describe their own needs. Moreover, for certain latent needs, users themselves may not necessarily be truly aware of them - for example, some users may be accustomed to purchasing relatively low-priced products without being aware of this tendency themselves, and so on. Therefore, this means that for users, constructing high-quality prompt text (Prompt) for conversing with a large AI model is relatively difficult, which in turn makes it difficult to obtain truly desired content through AI interaction.

In addition, the specific AI interaction function is provided by a specific page, meaning that users can only interact with the AI while on that particular page. For example, assuming that an AI interaction entry point is provided on the client application home page, users can only interact with the AI while browsing that home page. However, the shopping guidance chains provided in an e-commerce platform typically include multiple chains, each of which may include multiple nodes and involve multiple different pages respectively. If only some pages implement the AI interaction function, users will be unable to interact with the AI when visiting other pages. On the other hand, if each page is required to separately implement the AI interaction function, this would on one hand entail a significant workload, and on the other hand, since different pages may correspond to different development teams, the AI interaction functions separately implemented by each team would be difficult to unify, and users may need to separately familiarize themselves with the interaction methods of different pages, thereby introducing new difficulties into the user's browsing experience.

In view of the above issues, in the embodiments of the present disclosure, the application of large AI models in e-commerce platforms has been improved. Specifically, a demand-responsive AI interaction "robot" module may be embedded into an e-commerce platform, and the module may, in the form of an independent plug-in, be embedded into pages corresponding to full-chain shopping scenario scenes (for example, homepage, channel page, venue page, product detail page, shopping cart page, order bundle completion page, and so on), so that users can receive AI assistance on multiple different pages while maintaining consistency in interface, interaction logic, and other aspects, without requiring the developers of each individual page to perform specific development work. In addition, the AI interaction "robot" can detect the shopping needs or demands that the user may have based on the type or function of the specific page and the behavior data actually generated by the user on the page, and thereafter can intelligently generate prompt text for conducting a dialogue with the AI; when the user approves the prompt text, the AI content generation model can generate specific consumption recommendations or solutions corresponding to specific shopping needs/demands so as to flexibly adapt to diverse user needs and business scenarios. That is to say, the so-called "demand-responsive" AI interaction refers not to directly providing a resident interaction entry on a certain page where the user initiates a question, but rather to detecting the user's shopping need on any page based on information such as the page's own type and function as well as the behavior data currently generated by the user on the page; if it can be detected that the user may have a certain shopping need, the AI can proactively initiate interaction with the user and, based on the specific detection result, provide dynamically changing dialogue prompts and generated content. Of course, in another implementation, if consistency of AI interaction experience across different pages does not need to be considered, the above-mentioned "demand-responsive" AI interaction module may also be implemented separately by different pages.

The specific AI interaction module may further correspond to a page element for display in the target page, where, when a user's shopping need is not detected, the page element may be in a collapsed or hidden state, and after the shopping need is detected, the page element may be switched to an expanded or displayed state, so as to enable interaction with the AI interaction module through the page element.

Specifically, after detecting a user's shopping need, the AI may proactively generate a corresponding prompt text based on the user's shopping need. Of course, in an optional mode, the user may also be asked to confirm the detected shopping need. For example, a prompt message may be displayed through the aforementioned page element, such as "Do you need to prepare a gift list for Christmas?", and so on. If the user accepts the detected result, a corresponding prompt text may be generated, and based on this prompt text, the AI content generation model may be invoked to generate content. In this way, since the specific prompt text is generated based on the user's shopping need, the content specifically generated also corresponds to that shopping need, and users do not need to manually construct a specific prompt text. Therefore, the difficulty or threshold for users to interact with the AI can be reduced, and the intelligence of the AI interaction process can be further enhanced. Regarding the content specifically generated by the AI content generation model, it may still be displayed through the aforementioned page element. Of course, the size of the page element may be dynamically scaled and adjusted according to the amount of content to be displayed, and may even be enlarged to full-screen status. Additionally, it is also possible to navigate to another receiving page to display the content generated by the specific AI content generation model, and so on.

From a technical implementation perspective, as mentioned above, support for the above functions may be developed separately by each page, or, in order to reduce the development costs for page developers, a unified SDK (Software Development Kit, that is, a toolkit provided by a service provider for implementing a specific product software function) may be provided, so that the above functional modules can be embedded into specific pages through such an SDK. In this way, the AI interaction function is not tightly coupled with specific pages, and specific page developers do not need to concern themselves with the specific implementation of the function, thereby reducing the development costs of page developers. At the same time, this enables the interface and interaction forms of the specific intelligent AI interaction to achieve unified expression across multiple different pages, providing users with a unified cross-scenario and cross-page experience.

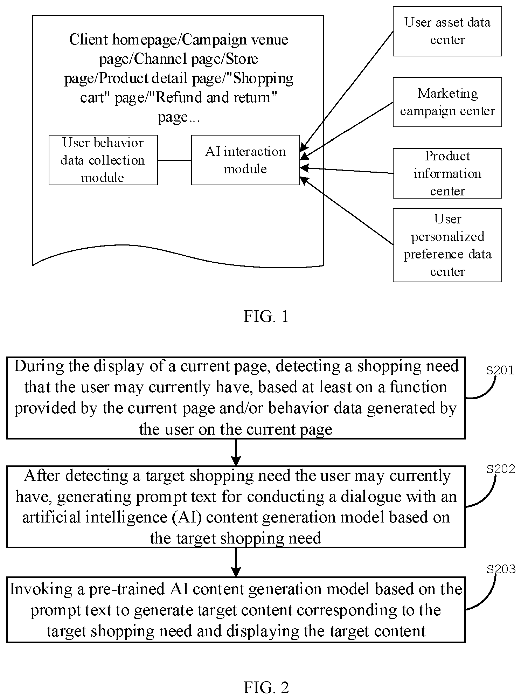

From a system architecture perspective, referring to FIG. 1, in a specific implementation, the embodiments of the present disclosure may provide the above-mentioned AI interaction module existing in the form of an SDK or the like (and may also exist in the form of SaaS (Software as a Service) or the like), so that the specific AI interaction model can be embedded into different pages corresponding to multiple nodes on a specific shopping guidance chain by way of SDK or the like, enabling these pages to have demand-responsive AI interaction functionality. In the above demand-responsive AI interaction process, the specific AI interaction module can obtain relevant information about the current page, and can also obtain, through a user behavior data collection module, behavior data and other information generated by the user on the current page; in addition, it can also obtain, through a user asset data center on the server side, the asset information that the user has within the current product information service system, obtain marketing campaign information published in the product information service system from a marketing campaign center, obtain marketing campaign information associated with products through a product data center, obtain the current user's shopping preference information from a user personalized preference data center, and obtain various other types of information; these pieces of information can be combined to detect the user's shopping need. After detecting the target shopping need, prompt text for conducting a dialogue with the artificial intelligence AI content generation model can be generated, so as to invoke the pre-trained AI content generation model based on the prompt text to generate target content corresponding to the target shopping need and display it. The specifically detected shopping need may also be confirmed by the user, and upon obtaining the user's approval, the corresponding prompt text generation and content generation are performed, and the generated content is displayed.

From the perspective of application scenarios, the main application scenarios of the demand-responsive intelligent AI interaction function provided by the embodiments of the present disclosure can be divided into pre-sales shopping guidance scenarios and post-sales service scenarios. In the pre-sales shopping guidance aspect, compared with the traditional online shopping process, the demand-responsive intelligent AI interaction function has built corresponding capabilities for real-time response to user needs in the shopping process, complex scene understanding, user intent recognition, and deep personalized shopping guidance. In particular, in situations where wireless terminals and mobile terminals have relatively small screens with limited display information, more accurate information and product reach can be provided through simple human-computer interaction (HCI). In after-sale scenarios, the demand-responsive AI assistant can also provide users with services such as logistics inquiry, refund and return, and dispute resolution in the form of dialogue.

The specific implementation solutions provided by the embodiments of the present disclosure are described in detail below.

First, in an embodiment of the present disclosure, an intelligent interaction method is provided. In one implementation, the method may be applied to an AI interaction module. The AI interaction module may specifically be used to be embedded into any page, so that multiple different pages may each have a demand-responsive AI interaction function, and provide users with a unified cross-scenario and cross-page experience. For example, any specific page may include any page among multiple pages of the same application, and the AI interaction module may be embedded into multiple pages. For example, the AI interaction module described above may be embedded into multiple pages corresponding to multiple nodes on the shopping guidance chain in a product information service system, and so on. In one optional approach, the AI interaction module may exist in the form of an SDK, so that the specific AI interaction module may be embedded into multiple different pages via the SDK. Alternatively, the AI interaction module may also exist in a form such as SaaS. This SDK plug-in or SaaS approach allows the AI interaction module to not only be rapidly embedded into multiple pages of various e-commerce platforms, but also to be embedded into pages of systems such as large AI model plug-ins and social software, thereby possessing strong extensibility and reusability. It should be noted here that, regardless of whether it exists in the form of an SDK or SaaS, the AI interaction module in the embodiments of the present disclosure and the specific pages may be mutually independent - that is, there is no tight coupling relationship between the AI interaction function and specific pages, and different pages may have the same AI interaction module embedded, and the AI interaction module may interact with users across different pages according to the same data processing logic and front-end display strategy.

Specifically, referring to FIG. 2, the method may specifically include:
S201: During the display of a current page, detecting a shopping need that the user may currently have, based at least on a function provided by the current page and/or behavior data generated by the user on the current page.

The current page is the page that the user is currently browsing, and may specifically be a page corresponding to any node on any shopping guidance chain in a product information service system. For example, it may include a client home page, a product recommendation page, a search page, a channel page, an event venue page, a store page, and a product detail page, and may also include a "shopping cart" page, an "order bundle completion" page, pages related to after-sale services, and so on.

In the embodiments of the present disclosure, rather than directly providing an AI interaction entry point in a specific page, the approach involves analyzing user behavior data and the like, and if it can be detected that a user may have a certain shopping need, proactively interacting with the user to respond to that shopping need. This is therefore referred to as demand-responsive AI interaction.

Specifically, when detecting a user's shopping need, at least the functions provided by the current page and/or behavior data generated by the user on the current page may be used. That is to say, in the embodiments of the present disclosure, since AI interaction functions may be provided on pages corresponding to multiple nodes across the full chain, and when users browse different pages, the functions provided by the specific pages differ, the needs that users may have may also differ. In addition, even on the same page, if different behavior data is generated, the user needs that can be expressed will also be different. Therefore, in a specific implementation, the functions of the page itself, the behavior data currently generated by the user on the current page, and other information may be combined to detect whether the user has a certain shopping need during the current browsing session. Of course, in a specific implementation, the information used as a basis when detecting the needs that the user may currently have may further include: asset information of the user within the product information service system (for example, whether there are unredeemed "red packets"), marketing campaign information published in the product information service system, marketing campaign information associated with products, and shopping preference information of the user (for example, whether the user is relatively sensitive to price attributes, whether the user prefers certain brands, and so on). By integrating information from multiple aspects, a more accurate detection of the user's shopping need may be achieved.

Among these, there are multiple possible implementations for specifically detecting a user's shopping need. For example, in one approach, some rules may be formulated in advance, in the form of: if a user generates certain behavior data on a certain type of page, then it may be determined that the user may have a certain shopping need. For example, assume that while a user is scrolling through specific recommended products on a product recommendation page, the user first clicks to view the product detail page of a certain mobile phone, then navigates back to the product recommendation page, and then clicks to view the product detail page of another same-model mobile phone; in this case, based on the above behavior data, it may be determined that the user may have a shopping need for that mobile phone. Alternatively, assume that while a user is scrolling through specific recommended products on a product recommendation page, the user clicks to view the detailed information of multiple products, all of which are related to a certain scene; in this case, it may be inferred that the user may have a shopping need related to that scene. Alternatively, assume that during a user's search for products, the user enters specific brand and model information for a particular mobile phone; this means the user has a clear need to purchase that mobile phone. Or, if the user only enters keywords such as "Christmas," this means the user may have a need to purchase products related to the Christmas scene, without specifying a particular type or model of product, and so on. In this way, after behavior data is collected, by matching it against such rules, it may be detected whether the user has a certain target shopping need.

In another approach, the detection of a user's shopping need may also be completed by a large AI model. Specifically, information such as the type and function of a page, and information about behavior data generated by the user on that page, may be input into the large AI model, which detects whether the user has a certain shopping need by understanding the specific data. Of course, in this approach, asset information of the user within the product information service system, marketing campaign information published in the product information service system, marketing campaign information associated with products, user's shopping preference information, and the like may also be input into the large AI model, for use in detecting the shopping need that the user may currently have. Additionally, during specific implementation, the large AI model may be pre-trained using some training samples, and by tuning the parameters of the large AI model, it may be given the capability to understand the above information and detect the specific shopping needs of users.

Alternatively, pre-established rules may also be combined with the detection of the large AI model. During specific implementation, needs that users may have across various types of pages may be categorized and summarized in advance to complete the formulation of rules or the training of the large AI model, and so on. The following uses the client application home page (which can generally be used for product recommendations), search page, shopping cart page, and product detail page, among others, as examples of pages in pre-sales shopping guidance scenarios, to introduce the categorization, summarization, and detection of user needs.
I. Client Application Home Page: The home page, as a public domain centralized traffic scenario, serves as a distribution point for all types of users. Therefore, the home page generally needs to accommodate the shopping needs of all types of users. For example, specific needs may include:
   1. Clear target product shopping need type: that is, the user has a clear desired brand and product, needs to quickly find the product, and obtain information about the product's price, discounts, comparisons, etc., in order to make a purchase decision. In this case, product-dimension-based information provision and/or decision-assistance content can be provided to the user. However, the home page in the prior art typically does not provide a direct path to satisfy this type of user need; instead, the user needs to navigate to a search page, product detail page, etc., and obtain more information about the product through click operations.
   2. Only a clear shopping scope: that is, the user has a clear shopping scene and desired category/brand, but does not yet have a specific desired product and needs to first find products that meet the requirements. In this case, scene-based shopping guidance can be provided to the user, along with more precise product recommendations after understanding the user's needs. However, home pages in the prior art generally do not have this capability, and users need to spend time browsing through products and shopping guidance.
   3. Having no clear shopping objective at all: In this case, the specific needs may vary depending on the user's shopping driving factor. For example, for discount/promotion-driven users, they may want to learn about the platform's promotional information, and so on. In response to this situation, users can be provided with clearer promotional information that can be associated with user preferences. However, pages such as the home page in the prior art contain relatively little aggregated information from the promotional perspective, which is usually scattered across the various business modules of the platform, requiring users to search for it on their own.

Alternatively, for product discovery-browsing-driven users, they may want to know whether there are good product recommendations. At this point, more good product recommendations and content reach can be provided to the user. In the prior art, the recommendation cards on the home page can satisfy certain product discovery recommendation scenarios, but lack more interesting and rich product recommendations, which cannot meet the user's needs.

In addition, some users may need to make lifestyle inquiries and want to learn about everyday life questions, for example, "White sneakers tend to turn black - what can be done about it?" At this point, answers to everyday life questions can be provided starting from the specific scenario, and since there is a possibility of shopping conversion, some related product recommendations may also be made. However, the home page in the prior art does not have the capability to satisfy similar needs; users are more likely to seek advice in the content feed and then navigate to the shopping platform to place an order after product discovery.

Based on the above summarization and analysis of needs that users may generate while browsing the home page, during the specific process of a user browsing this type of home page, it is possible to determine, based on behavior data generated by the user on the page, whether the user has a clear target shopping product or a clear target shopping scope, and then detect the needs the user may have based on the determination results.

For example, suppose that while a user is scrolling and browsing specific recommended products in a home page containing a product recommendation information feed, the user first clicks to view the product detail page of a certain mobile phone, then returns to the product recommendation page, and clicks to view the product detail page of another same-model mobile phone. Based on the above behavior data, it can be determined that the user has a clear target shopping product need, specifically that this user may want to purchase this mobile phone. Further, it can be detected that the target shopping need of this user may be product-dimension-based information provision and/or decision-assistance content, for example, providing a detailed introduction to this mobile phone, or summarizing user reviews of this mobile phone, and so on, so as to facilitate a purchase decision.

Alternatively, suppose that while a user is scrolling and browsing specific recommended products in a product recommendation page, the user clicks to view the detailed information of multiple products, all of which are related to a certain scene. It can then be inferred that the user may have a shopping need related to that scene, that is, the user belongs to the situation of having only a clear shopping scope. In this case, the specifically detected need may be to obtain target-scene-based shopping guidance. For example, if multiple products that the user clicks to view are all related to "Christmas", it can be detected that the user may have a need for shopping guidance based on the "Christmas" scene, and so on.

Alternatively, assume that a user is scrolling through recommended product cards on a product recommendation page but has never performed operations such as clicking to view details; in this case, it can be inferred that the user is currently "browsing aimlessly" on that page, with no clear target (neither a clear product nor a clear scope such as a scene or brand). In this situation, it can be inferred that the user belongs to the scenario of having no clear shopping target, and when specifically performing shopping need detection, asset information the user has within the product information service system, marketing campaign information published in the product information service system, marketing campaign information associated with products, and the user's shopping preference information (which may specifically include the primary shopping driving factors, for example, including price-sensitive users who may belong to discount/promotion-driven users, or may also include product-discovery-driven users, and so on ) can be combined to comprehensively detect the potential shopping needs of the user. For example, it is possible to determine, based on the user's historical behavior data, whether the user has a clear shopping driving factor, and if so, it can be detected that the user's target shopping need is information related to the shopping driving factor, for example, including the aforementioned information related to price-reduction promotional campaigns, or product-discovery-related content, and so on.

II. Search page: For search scenarios, users generally have clear shopping demands, including a clear scene, product category scope, or already have clear products of interest. For example, specifically, this may include:
1. Scene-based search needs: In this case, the search is usually a fuzzy search based on input keywords, such as: Christmas decoration, mobile phone, pants, and so on. In this situation, the system can help users clarify the specific scene ambiance and form a product recommendation list that conforms to the user's shopping habits, and so on. However, existing technologies lack the capability for continuous interaction and can only rely on users continuously adjusting keywords themselves, resulting in a long decision-making cycle.
2. Product-based search needs: This is usually a precise search based on input keywords, such as "a certain brand and model of mobile phone," and so on. At this point, users may need to obtain more information about the product, such as product features/specifications introduction, price, store and specific product services, reviews, shipping origin, fulfillment information, and so on. In existing technologies, product-dimension filtering is supported; however, users are required to manually perform filtering and feature comparison, and there are no shopping guidance suggestions at the SKU (Stock Keeping Unit) dimension.

For this type of search page, in the embodiments of the present disclosure, based on product search condition information entered by the user on the current page, a determination may be made as to whether the user has a clear target shopping product or a clear target shopping scope, and the user's potential needs may be detected based on the determination result.

For example, suppose the user enters the search keyword "Christmas," then it can be detected that the user's need may be to obtain a list of items related to the "Christmas" scene; or, suppose the user enters the search keyword "a certain brand and model of mobile phone," then it can be detected that the user's need may be to obtain a comparison of the same-model products related to that product, and so on, to help the user make a selection decision.

III. Product detail page: The product detail page is mainly used to provide a brief description of the features of a specific product, shopping guidance information on colors/specifications, merchant service conditions, product reviews, delivery fulfillment, and other information. During the process of browsing such a page, if the user has not yet performed further operations such as adding to the "shopping cart" or placing a purchase order, the user may generally need to obtain more information about the specific product, including product features/specifications introduction, price, store and specific product services, reviews, shipping origin, fulfillment, and other information; or, for products in certain special categories, the user may also want to know the usage effect of the product in the desired scene. For example, for clothing, furniture, and so on, before placing an order, the user may want to know the wearing effect of specific clothing on themselves, or the matching effect with the decoration style of their own room or other furniture, and so on. In existing technologies, users can only view all the content on the page to obtain more comprehensive information; or, for information such as size recommendations and shipping time, users can usually only contact the store's customer service staff, which, however, is subject to the merchant's customer service resources, online hours, time differences, and other factors, and so on.

In the embodiments of the present disclosure, if the user's dwell time on the current page exceeds a threshold or the user scrolls through multiple screens, but has not performed the operation of adding to the to-be-settled product set (i.e., the "shopping cart") or a purchase operation, then it is detected that the user's target shopping need may be to obtain more comprehensive information about the target product, or to obtain information about the effect of the target product in the desired usage scene.

IV. To-be-settled product set page, i.e., the shopping cart page. When visiting this page, users generally pay more attention to promotions, discounts, and price reductions for products already added to the cart, as well as order bundle completion for meeting discount thresholds during promotional events, in order to make the final purchase decision. In this situation, the user's target shopping need may generally include: price changes for products already added to the cart, price-drop reminders when added products reach the expected price, recommendations for products to complete an order, and associated product recommendations for products already added to the cart, and so on.

Therefore, in the embodiments of the present disclosure, based on the product information in the to-be-settled product set, including a comparison between the current price and the price when the product was added to the shopping cart, whether the product is participating in a certain promotional event, and other conditions, a determination may be made as to whether the user has needs for obtaining price change information for products in the to-be-settled product set, adding more products to the to-be-settled product set to meet the usage conditions for certain user benefits, or receiving associated product recommendations for products in the to-be-settled product set, and so on.

Regarding pages related to after-sale scenarios, for example, on the logistics inquiry page, the user's need can be directly determined to be obtaining information such as logistics status and logistics details; or, if certain special statuses occur, such as being held up at customs, the user may also need to obtain corresponding solutions, and so on. Or, for reverse transaction pages such as returns and refunds, the user's need can be detected based on the status of the transaction. For example, if a refund or return request has not yet been submitted, the user may need to obtain description information related to refund instructions; or, if a refund or return request has already been submitted, the user may want to know the refund progress, and so on.

S202: After detecting the target shopping need the user may currently have, generating prompt text for conducting a dialogue with an artificial intelligence (AI) content generation model based on the target shopping need.

After detecting, based on page information, user behavior data, and other factors, that the user may currently have a certain target shopping need, prompt text for conducting a dialogue with the AI content generation model may be generated based on the target shopping need. Of course, in a specific implementation, an operation option for confirming the detected target shopping need may also be provided through the page element corresponding to the aforementioned AI interaction module, and the prompt text may be generated after the user completes the confirmation operation.

For example, in the homepage scenario, if it is detected that the user has a clear shopping need for a specific product, a question for confirmation to the user may be generated, for example "Are you looking for a certain product?", and it may be displayed through the aforementioned page elements; if the user confirms by selecting "Yes" or directly clicking on the question, a specific prompt text may then be generated for input into the large AI model for content generation. Of course, in a specific implementation, the prompt text may also be generated first, and after the large AI model performs preliminary content generation, confirmation may then be presented to the user; for example, similarly assuming that it is detected that the user has a clear shopping need for a specific product, the corresponding prompt text may first be generated, and the large AI model generates content related to this product, determining whether multiple merchants are selling this product, whether certain merchants are running promotional campaigns for this product, and so on. Thereafter, text for confirmation to the user is generated, for example, "Are you looking for a certain product? There are currently 10 items on sale," and so on. In this way, since not only is it detected that the user may be looking for a certain product, but also information with a clear benefit point such as "10 items are currently on sale" can be provided to the user simultaneously, this can be more conducive to enhancing the user's interest in detailed content, and so on.

After the user confirms the detected target shopping need, corresponding prompt text may be generated for the specific target shopping need. For example, for the aforementioned example, the generated prompt text may be: "Look up which same-model products of a certain product are currently for sale, which of them are participating in promotional events, and compare them across dimensions such as price, performance, logistics, and after-sale service, and provide recommended purchase suggestions," and so on. Such prompt text can then be input into the AI content generation model to generate specific content.

That is to say, in the process of using the AI content generation model for content generation, the construction of prompt text is very critical; in order to obtain high-quality content, high-quality prompt text must first be constructed. In conventional approaches, users construct prompt text on their own according to their own needs and then input it into the large AI model for content generation. However, in the embodiments of the present disclosure, given that constructing high-quality prompt text may typically be very difficult for ordinary users - users may find it difficult to clearly describe their needs in the prompt text, and moreover the process of constructing prompt text takes up the user's time, and so on - a solution for helping users construct prompt text is provided. In other words, in the embodiments of the present disclosure, not only can the large AI model intelligently generate certain content for users, but even the prompt text can be generated automatically. From another perspective, the input information for the large AI model is no longer the conventionally user-entered prompt text, but can instead include the type and function of the page, the user's behavior data on the page, and even the user's asset information in the current system, the status of marketing campaigns in the system, the status of marketing campaigns associated with products, the user's personalized preference information, and so on. Of course, in a specific implementation, the above information may first be preprocessed to generate specific prompt text, which is then input into the large AI model for content generation.

S203: Invoking the pre-trained AI content generation model based on the prompt text to generate target content corresponding to the target shopping need and displaying the target content.

After generating the specific prompt text, the pre-trained AI content generation model may be invoked based on the prompt text to generate target content corresponding to the target shopping need and display it. Here, under various different pages and different user behavior data conditions, because user needs differ, the correspondingly generated prompt text differs, and the generated content also differs.

For example, if the current page being browsed is the home page or the search page, and it is determined that the user has a clear target shopping product, then the user's target shopping need can be detected as product-dimension-based information provision and/or decision-assistance content, at which point prompt text corresponding to this need can be generated, and correspondingly, the AI content generation model can generate product-dimension-based information provision and/or decision-assistance content.

In an embodiment, the specifically generated product-dimension-based information provision and/or decision-assistance content may include: a summary of detailed information, review information, and other content about the product, or a comparison of same-model products provided by different merchants across multiple dimensions and/or product recommendation information. For the latter, when a user has a clear need to purchase a particular product, since the current system may include multiple merchants all selling the same-model product, it is relatively important for the user to make a choice among these merchants, and such a choice typically requires comparing the same-model products provided by different merchants across multiple dimensions. In the prior art, the user can only click to view the product detail page of each same-model product separately, obtain the relevant information, and then make comparisons; whereas in the embodiments of the present disclosure, if it is found that the user has the aforementioned need, a corresponding prompt text can be automatically generated, and the large AI model can generate content related to comparing multiple same-model products. The user can directly view the comparison results for multiple same-model products from the same page, and can compare them across multiple dimensions separately, or an overall purchase recommendation can also be provided. In this way, the user can make a choice based on the dimensions they care about most. For example, each same-model product can be compared across multiple different dimensions such as price, logistics, after-sales service, and reviews, and the more recommended product under each dimension can be identified separately, so that if the user pays more attention to a particular dimension when shopping, they can select the product that is more recommended under that dimension. For example, if the user is more concerned about the price dimension, they can select the product with an advantage in the price dimension; if the user wants to receive the goods as soon as possible, they can select the product with an advantage in the logistics dimension, and so on. In this way, it is possible to help users more quickly complete comparisons of multiple same-model products and make shopping decisions.

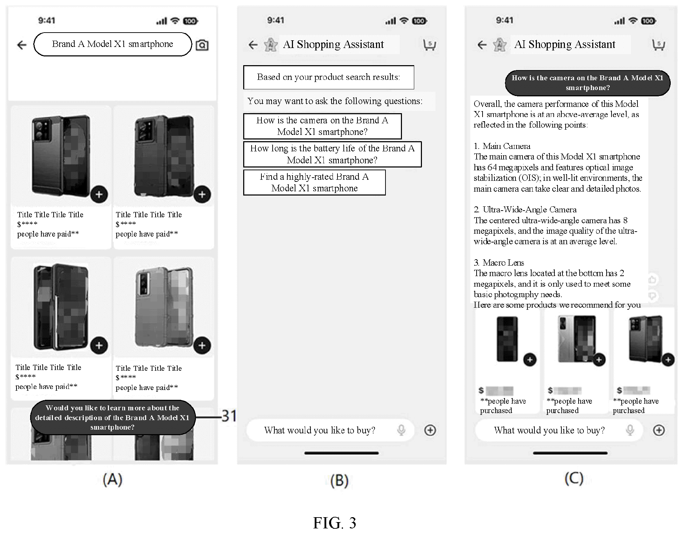

For example, as shown in FIG. 3(A), assume that a user enters "Brand A Model X1 smartphone" on a search page and initiates a search. This is a type of precise search; that is, it can be detected that the user has a clear target shopping product need, which is the "Brand A Model X1 smartphone." At this point, an operation option for confirming the detected result can be provided at the position indicated by 31, which may display: "Would you like to learn more about the detailed description of the Brand A Model X1 smartphone?" If the user clicks that option, the user can enter the AI interaction page, as shown in FIG. 3(B), where several optional example questions can be provided based on the keyword information entered by the user on the search page and additionally in combination with the user's behavior data on the search page, such as: "How is the camera on the Brand A Model X1 smartphone?", "How long is the battery life of the Brand A Model X1 smartphone?", "Find a highly-rated Brand A Model X1 smartphone," and so on. The user can select a specific question from these to pose to the AI assistant, and such a question can serve as the prompt text for interacting with the AI content generation model. For example, if the user selects the question "How is the camera on the Brand A Model X1 smartphone?", the content generated by the AI assistant can be as shown in FIG. 3(C), providing an overall evaluation of the camera performance of this smartphone - for example, it is at an "above-average level" - and further elaborating on several key points, and so on. Such content can be generated by the AI content generation model after comprehending the detailed description information, attribute parameter information, user review information, and other information of this smartphone.

If, based on the user's browsing behavior on the home page or other pages, or based on keywords entered on the search page, it is determined that the user has a clear target shopping scope, a further determination may be made as to whether the target scope is related to a target scene; if so, the user's target shopping need may be detected as target-scene-based shopping guidance, at which point, after generating the corresponding prompt text, the AI content generation model may generate shopping-list-form product recommendation information aggregated by the target scene.

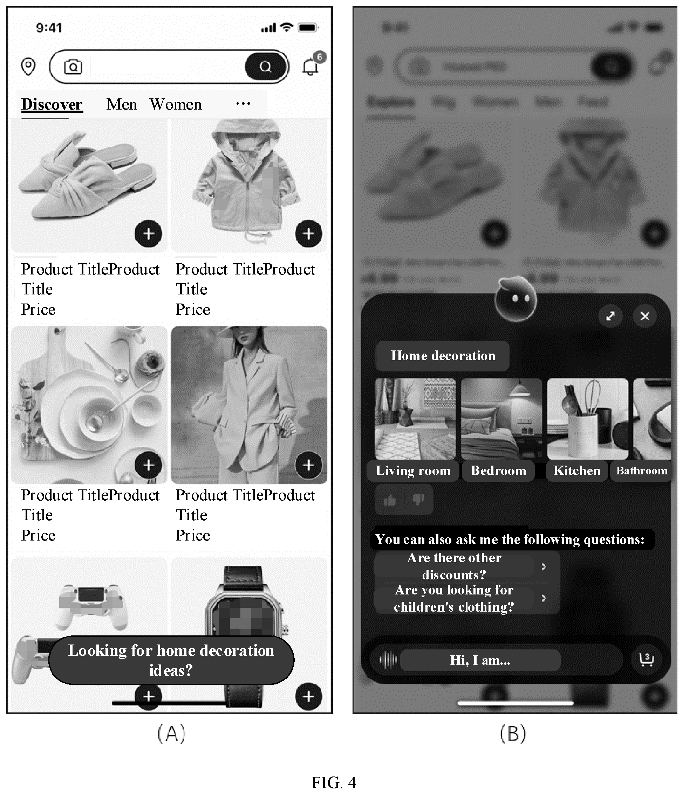

For example, assume that a user browses multiple recommended products on the home page, and several of them are related to "home decoration"; it can then be determined that the user's target scope may be related to the scene of "home decoration." Accordingly, it can be detected that the user's target shopping need may be based on "home decoration" as a scene for shopping guidance. At this point, as shown in FIG. 4(A), interactive content such as "Looking for home decoration ideas?" can be provided in the page element corresponding to the AI interaction module. If the user clicks on that page element, it indicates that the user may have confirmed the detected result; accordingly, a corresponding prompt text can be generated, and the AI content generation model can generate content related to shopping guidance for the "home decoration" scene. On the front-end page, the page element corresponding to the AI interaction module can then be enlarged to display the content related to shopping guidance for the "home decoration" scene therein. For example, as shown in FIG. 4(B), the specifically generated content may include shopping-list-form product recommendation information aggregated by the "home decoration" scene. Specifically, recommendations may be categorized by living room, bedroom, kitchen, etc. In addition, if the user's behavior data previously collected also indicates that the user may have other needs, those can also be displayed through the page element - for example, as shown in FIG. 4(B): "You can also ask me the following questions: Are there other discounts? Are you looking for children's clothing?" and so on.

It should be noted that, in existing approaches, users can search for product information related to a specific scene through the search function; however, under the search logic, search results are typically provided by way of keyword matching, and various complex search result ranking mechanisms are also involved, such that although users can view search results related to specific scene keywords on the search results page, it is difficult to quickly purchase the products they need. For example, after entering the keyword "Christmas," the search results may include multiple products related to "Christmas," among which multiple consecutive products may all be Christmas trees, or multiple consecutive products may all be Christmas stockings, and so on. However, in the embodiments of the present disclosure, if it is found that a user has a shopping need related to a certain scene, the AI content generation model may generate shopping-list-form product recommendation information aggregated by the target scene. For example, it may include Christmas trees, Christmas stockings, bells, wreaths, and so on, with one or several recommended products corresponding to each category, so that the user can directly complete the purchase of Christmas-related products according to the list on that page, and so on. In addition, in a preferred implementation, specifically when providing the shopping-list-form product recommendation information, the AI content generation model may also generate an ambient background image corresponding to the target scene. For example, when generating a shopping list related to the "Christmas" scene, a background image with a "Christmas" ambiance may also be simultaneously generated, so that the displayed content generation result has a stronger scene ambiance and the user experience is enhanced.

In addition, when it is determined that the user has a clear target shopping scope, the target scope may also be related to a certain category. For example, if the user has browsed multiple different products under the same category on the current page, it can be detected that the user's target shopping need may be to purchase products in that target category, or to compare multiple different products under that target category. In this case, by generating the corresponding prompt text, the AI content generation model can generate product recommendation information about the target category, or comparison and/or recommendation information for the multiple different products across multiple dimensions.

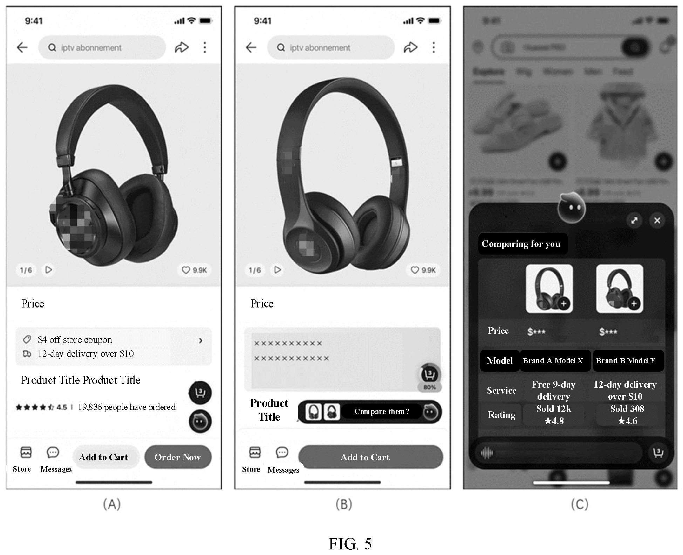

For example, suppose that during the process of browsing recommended products on the home page, a user first browses the product detail page of a wireless headset as shown in FIG. 5(A), and then browses the product detail page of another wireless headset as shown in FIG. 5(B). It can then be determined that the user has a relatively clear target scope - namely, related to the category of wireless headsets - and it can further be inferred that the user may need to compare these two wireless headsets. At this point, the information "Want to compare them?" may be provided on the page as shown in FIG. 5(B), and thumbnails of the two headsets may also be displayed for the user's reference. After the user taps on this page element, the page element may be enlarged as shown in FIG. 5(C), displaying the AI-generated content. This may specifically include content comparing the two products across dimensions such as price, model, service, and rating, and so on.

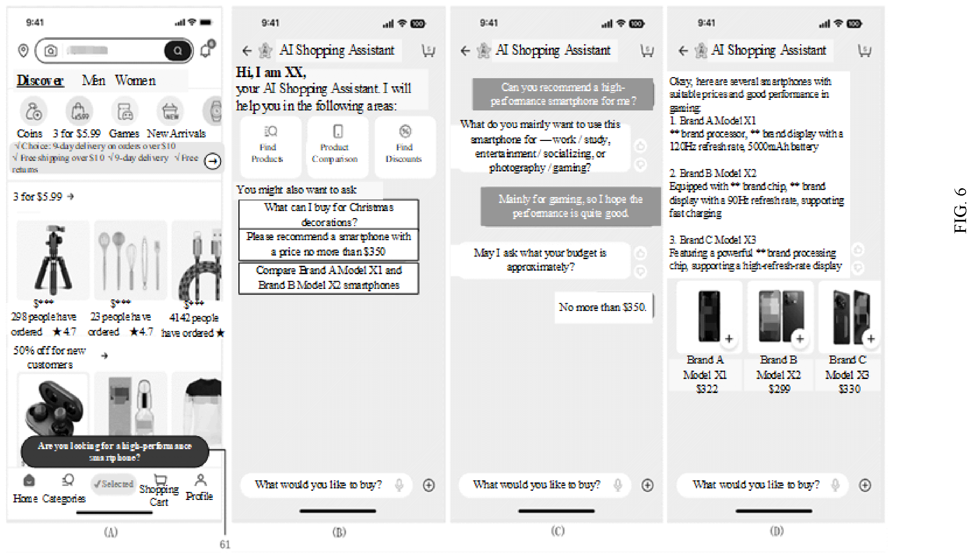

It should be noted here that, when it is detected that the user has a clear target scope, after initiating AI interaction with the user, a conversation with the user can be conducted to further understand the user's needs before providing more precise product recommendations. For example, as shown in FIG. 6, where FIG. 6(A) shows the home page of the client application. While the user is browsing this page, assume that it is detected based on the user's behavior data and other information that the user has a need to "purchase a high-performance smartphone." An operation option for initiating an inquiry to the user can be provided at the position indicated by 61, for example: "Are you looking for a high-performance smartphone?" If the user clicks that operation option, the user can enter the AI interaction interface as shown in FIG. 6(B). In this interface, multiple candidate questions can also be provided based on the previously obtained behavior data of the user on the current page and other information, from which the user can select one to pose to the AI assistant, or alternatively, the user can enter a specific question through the input box at the bottom. Assume that as shown in FIG. 6(C), the question actually entered by the user is "Can you recommend a high-performance smartphone for me?", the AI can further clarify the user's needs through conversation with the user. For example, the AI assistant can ask the user: "What do you mainly want to use this smartphone for - work / study, entertainment / socializing, or photography / gaming?" If the user replies: "Mainly for gaming, so I hope the performance is quite good"; afterward, the AI can further ask the user: "May I ask what your budget is approximately?", and the user can reply: "No more than $350," and so on. In this way, it can be understood that the user wants to purchase a smartphone for gaming, with the primary consideration being the smartphone's performance, and the price not exceeding $350. Therefore, more precise recommendations can be provided to the user based on this information. For example, the content specifically generated by the AI assistant can be as shown in FIG. 6(D), which includes three recommended smartphones, along with respective reasons for recommendation, and the user can make a further selection based on the recommendation results.

In addition, if it is determined that the user has no clear shopping target, it may be determined, based on the user's historical behavior data, whether the user has a clear shopping driving factor; if so, the user's target shopping need may be detected as product information related to the shopping driving factor, and subsequently, by generating the corresponding prompt text, the AI content generation model may generate product content aggregated by the shopping driving factor. That is, a determination may be made based on the user's own situation. For example, if analysis reveals that a certain user is marketing-sensitive and has previously purchased products with large discounts or "flash sale" products, a list of price-reduced products may be provided; if the user is brand-conscious, product recommendation information related to those brands may be provided, and so on.

For a product detail page, if the user's target shopping need is detected to be obtaining more comprehensive information about the target product, or obtaining information about the effect of the target product in a desired usage scene, the AI content generation model may summarize the detailed information of the target product and generate a summarized text, or, after the user provides images related to the usage scene, generate a usage effect image simulating the target product in the usage scene. For example, the detailed description information of the product may be summarized, or the user review content of the product may be summarized, and so on. In this way, online consultation services can be provided to users 7×24h, supplementing the customer service resources of the platform and merchants, providing more patient and genuine product shopping guidance advice, helping to summarize buyer feedback and reviews, and so on.

Alternatively, assuming the current product is an apparel product, the user may also be asked whether they would like to see how the apparel would look on them; if so, the user may be prompted to upload a photo of themselves, and the AI content generation model can then use AI image generation capabilities to generate a wearing effect image for the user's reference. Similarly, assuming the current product is a furniture product, the user may be prompted to upload a photo of their room, and the AI content generation model can generate a preview of how the specific furniture would look in their room, and so on.

If the current page is a shopping cart page, and based on the products in the to-be-settled product set, it is determined that the user has a need to obtain price change information for products in the to-be-settled product set, to add more products to the to-be-settled product set to meet the conditions of use for certain user benefits, or to receive associated product recommendations for products in the to-be-settled product set, the AI content generation model may move products with price changes to a more prominent position on the current page for display, or provide product recommendation information for products that satisfy the conditions of use or belong to associated products.

In summary, through the embodiments of the present disclosure, during the display of the current page, the AI interaction module can detect the user's potential current shopping need based on the functions provided by the current page and/or the behavior data generated by the user on the current page. After detecting the user's current potential target shopping need, a prompt text for conducting a dialogue with the AI content generation model can be generated based on the target shopping need; thereafter, the pre-trained AI content generation model can be invoked based on the prompt text to generate target content corresponding to the target shopping need and display it to the user. In this way, because the user's potential target shopping need can be detected, prompt text can be automatically generated based on the detected target shopping need, and content for resolving the corresponding issue can be generated, this constitutes a demand-responsive proactive outreach AI interaction mode. Under this mode, the user is not required to initiate interaction with the AI; instead, the AI interaction module proactively initiates the interaction and can also automatically construct prompt text for conducting a dialogue with the AI model. This reduces the difficulty and barrier for users to interact with the AI, and is conducive to improving the user experience. Furthermore, the system can intelligently and dynamically provide solutions corresponding to shopping needs based on different user shopping need detection results, thereby flexibly adapting to diverse user needs and scenarios and improving users' information retrieval efficiency.

In an optional implementation, the AI interaction module may be provided in the form of an SDK or the like, and the AI interaction module may be embedded into a variety of different pages, for example, pages corresponding to multiple nodes on the shopping guidance chain in the product information service system, and so on, so that the AI interaction module is decoupled from specific pages, facilitating the provision of a unified cross-scenario page interaction experience for users.

In addition, this approach is more friendly and convenient for user groups such as new users who are unfamiliar with operating e-commerce systems. Furthermore, by providing support for interaction modalities such as voice, gesture, and video, a more friendly experience can also be provided for user groups such as visually impaired users.

It should be noted that the embodiments of the present disclosure may involve the use of user data. In practical applications, user-specific personal data may be used in the solutions described herein within the scope permitted by applicable laws and regulations, provided that the applicable laws and regulations of the country where the application is deployed are complied with (for example, the user has given explicit consent, the user has been effectively notified, and so on).

Corresponding to the foregoing method embodiments, the embodiments of the present disclosure further provide an intelligent interaction apparatus, which may include:
a need detection unit, configured to, during the display of a current page, detect the shopping need that the user may currently have based at least on the functions provided by the current page and/or behavior data generated by the user on the current page;
a prompt text generation unit, configured to, after detecting a target shopping need that a user may currently have, generate prompt text for conducting a dialogue with an artificial intelligence (AI) content generation model based on the target shopping need;
a content generation unit, configured to invoke a pre-trained AI content generation model based on the prompt text, so as to generate target content corresponding to the target shopping need and display the target content.

The method is applied to an artificial intelligence AI interaction module, and the AI interaction module is configured to be embedded into any page.

Specifically, the AI interaction module exists in the form of a software development kit (SDK), so that the AI interaction module can be embedded into any page via the SDK.

The multiple pages comprise pages corresponding to multiple nodes on the shopping guidance chain in the product information service system.

In a specific implementation, the AI interaction module has a corresponding page element for display in the target page, where, when the shopping need is not detected, the page element is in a collapsed or hidden state, and after the shopping need is detected, the page element is in an expanded or displayed state, for interacting with the AI interaction module via the page element.

In addition, the apparatus may further comprise:
a need confirmation unit, configured to provide, in the target page element, an operation option for confirming the target shopping need after the target shopping need is detected, so that upon receiving a confirmation message from the user, a prompt text for conducting a dialogue with an artificial intelligence (AI) content generation model is generated based on the target shopping need.

Here, the generated prompt texts are multiple, and the apparatus further comprises:
a prompt text selection unit, configured to provide, in the target page element, an operation option for selecting among multiple prompt texts, so that after receiving the prompt text selected by the user, an invocation is initiated to the AI content generation model.

Here, when detecting the needs that the user may currently have, the information relied upon further includes: asset information of the user within the product information service system, marketing campaign information published in the product information service system, marketing campaign information associated with products, and shopping preference information of the user.

Specifically, the functions provided by the current page include: providing product recommendation information; in this case, the need perception unit may be specifically configured to:
determine, based on behavior data generated by the user on the page containing the product recommendation information feed, whether the user has a clear target shopping product or a clear target shopping scope, and detect the needs that the user may potentially have based on the determination result.

Alternatively, the functions provided by the current page include: providing product search information; in this case, the need perception unit may be specifically configured to:
determine, based on product search condition information entered by the user on the current page, whether the user has a clear target shopping product or a clear target shopping scope, and detect the needs that the user may potentially have based on the determination result.

Specifically, the need perception unit may be specifically configured to:
if it is determined that the user has a clear target shopping product, detect the user's target shopping need as product-dimension-based information provision and/or decision-assistance content, so that by generating corresponding prompt text, the AI content generation model generates product-dimension-based information provision and/or decision-assistance content.

Here, the product-dimension-based information provision and/or decision-assistance content comprises: comparison among same-model products provided by different merchants across multiple dimensions and/or product recommendation information.

Alternatively, the need perception unit may be specifically configured to:
if it is determined that the user has a clear target shopping scope and the target scope is related to a target scene, detect the user's target shopping need as target-scene-based shopping guidance, so that by generating corresponding prompt text, the AI content generation model generates shopping-list-form product recommendation information aggregated by the target scene.

Here, when providing the product recommendation information in the form of a shopping list, the AI content generation model may further be configured to generate an ambient background image corresponding to the target scene.

In addition, the need perception unit may be specifically configured to:
if it is determined that the user has a clear target shopping scope and the target scope includes multiple different products under a target category, detect the user's target shopping need as purchasing products of the target category or comparing the multiple different products, so that by generating corresponding prompt text, the AI content generation model generates product recommendation information regarding the target category, or, compares the multiple different products across multiple dimensions and/or generates recommendation information.

In addition, the need perception unit may be specifically configured to:
if it is determined that the user has no clear shopping target, determine based on the user's historical behavior data whether the user has a clear shopping driving factor; if so, detect the user's target shopping need as information related to the shopping driving factor, so that by generating corresponding prompt text, the AI content generation model generates content aggregated by the shopping driving factor.

Furthermore, the functions provided by the current page include: providing detailed information about a target product;
in this case, the need perception unit may be specifically configured to:
if the user's dwell time on the current page exceeds a threshold or the user scrolls through multiple screens, but has not performed an operation of adding to the to-be-settled product set or a purchase operation, detect the user's target shopping need as obtaining more comprehensive information about the target product, or obtaining effect information of the target product in a desired usage scene, so that by generating corresponding prompt text, the AI content generation model summarizes the detailed information of the target product and generates summarized text, or, after the user provides a relevant image of the usage scene, generates a usage effect image of simulating the target product into the usage scene.

Alternatively, the functions provided by the current page include: providing product list information of products that the user has added to the to-be-settled product set;
the need perception unit may be specifically configured to:
determine, based on the products in the to-be-settled product set, whether the user has a need to obtain price change information of products in the to-be-settled product set, to add more products to the to-be-settled product set to satisfy the usage conditions of a certain user entitlement, or to obtain associated product recommendations for products in the to-be-settled product set, so that by generating corresponding prompt text, the AI content generation model moves products with price changes to a prominent position on the current page for display, or provides product recommendation information for products that satisfy the usage conditions or belong to associated products.

In addition, embodiments of the present disclosure further provide a computer-readable storage medium having a computer program stored thereon, where when the program is executed by a processor, the steps of the method described in any one of the foregoing method embodiments are implemented.

And an electronic device, comprising:
one or more processors; and
a memory associated with the one or more processors, the memory configured to store program instructions that, when read and executed by the one or more processors, implement the steps of the method described in any one of the foregoing method embodiments.

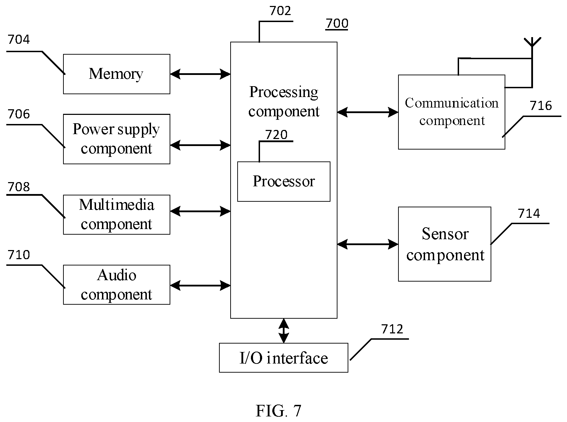

FIG. 7 exemplarily illustrates the architecture of an electronic device. For example, device 700 may be a mobile phone, a computer, a digital broadcasting terminal, a messaging device, a game console, a tablet device, a medical device, a fitness device, a personal digital assistant, an aircraft, or the like.

Referring to FIG. 7, device 700 may include one or more of the following components: processing component 702, memory 704, power supply component 706, multimedia component 708, audio component 710, an Input/Output (I/O) interface 712, sensor component 714, and communication component 716.

Processing component 702 generally controls the overall operations of device 700, such as operations associated with display, telephone calls, data communications, camera operations, and recording operations. Processing component 702 may include one or more processors 720 to execute instructions to complete all or some of the steps of the method provided by the technical solution of the present disclosure. In addition, processing component 702 may include one or more modules to facilitate interaction between processing component 702 and other components. For example, processing component 702 may include a multimedia module to facilitate interaction between multimedia component 708 and processing component 702.

Memory 704 is configured to store various types of data to support operations of device 700. Examples of such data include instructions for any application or method operating on device 700, contact data, phonebook data, messages, pictures, videos, and the like. Memory 704 may be implemented by any type of volatile or non-volatile storage device or a combination thereof, such as Static Random Access Memory (SRAM), Electrically Erasable Programmable Read-Only Memory (EEPROM), Erasable Programmable Read-Only Memory (EPROM), Programmable Read-Only Memory (PROM), Read-Only Memory (ROM), magnetic memory, flash memory, a magnetic disk, or an optical disk.

Power supply component 706 provides power to various components of device 700. Power supply component 706 may include a power management system, one or more power supplies, and other components associated with generating, managing, and distributing power for device 700.

The multimedia component 708 includes a screen that provides an output interface between the device 700 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, swipes, and gestures on the touch panel. The touch sensor may not only sense the boundary of a touch or swipe action, but also detect the duration and pressure associated with the touch or swipe operation. In some embodiments, the multimedia component 708 includes a front-facing camera and/or a rear-facing camera. When the device 700 is in an operating mode, such as a shooting mode or a video mode, the front-facing camera and/or rear-facing camera can receive external multimedia data. Each of the front-facing camera and the rear-facing camera may be a fixed optical lens system or may have focal length and optical zoom capabilities.

The audio component 710 is configured to output and/or input audio signals. For example, the audio component 710 includes a microphone (MIC), and when the device 700 is in an operating mode, such as a call mode, a recording mode, and a voice recognition mode, the microphone is configured to receive external audio signals. The received audio signals may be further stored in the memory 704 or transmitted via the communication component 716. In some embodiments, the audio component 710 further includes a speaker for outputting audio signals.

The I/O interface 712 provides an interface between the processing component 702 and peripheral interface modules, where the peripheral interface modules may be a keyboard, a click wheel, buttons, and the like. These buttons may include, but are not limited to: a home button, a volume button, a start button, and a lock button.

The sensor component 714 includes one or more sensors for providing status assessments of various aspects of the device 700. For example, the sensor component 714 can detect the open/closed state of the device 700, the relative positioning of components, such as the display and keypad of the device 700, the sensor component 714 can also detect a position change of the device 700 or a component of the device 700, the presence or absence of contact between a user and the device 700, the orientation or acceleration/deceleration of the device 700, and temperature changes of the device 700. The sensor component 714 may include a proximity sensor configured to detect the presence of nearby objects without any physical contact. The sensor component 714 may also include a light sensor, such as a CMOS (Complementary Metal-Oxide-Semiconductor) or CCD (Charge-Coupled Device) image sensor, for use in imaging applications. In some embodiments, the sensor component 714 may also include an acceleration sensor, a gyroscope sensor, a magnetic sensor, a pressure sensor, or a temperature sensor.

The communication component 716 is configured to facilitate wired or wireless communication between the device 700 and other devices. The device 700 may access a wireless network based on communication standards, such as WiFi (Wireless Fidelity), or 2G (Second Generation), 3G (Third Generation), 4G (Fourth Generation)/LTE (Long Term Evolution), 5G (Fifth Generation), and other mobile communication networks. In one exemplary embodiment, the communication component 716 receives broadcast signals or broadcast-related information from an external broadcast management system via a broadcast channel. In one exemplary embodiment, the communication component 716 further includes a Near Field Communication (NFC) module to facilitate short-range communication. For example, the NFC module may be implemented based on Radio-Frequency Identification (RFID) technology, Infrared Data Association (IrDA) technology, Ultra Wide Band (UWB) technology, Bluetooth (BT) technology, and other technologies.

In an exemplary embodiment, the device 700 may be implemented by one or more Application Specific Integrated Circuits (ASIC), Digital Signal Processors (DSP), Digital Signal Processing Devices (DSPD), Programmable Logic Devices (PLD), Field Programmable Gate Arrays (FPGA), controllers, microcontrollers, microprocessors, or other electronic components, for executing the above-described methods.

In an exemplary embodiment, there is also provided a non-transitory computer-readable storage medium comprising instructions, such as the memory 704 comprising instructions, executable by the processor 720 of the device 700 to complete the method provided by the technical solution of the present disclosure. For example, the non-transitory computer-readable storage medium may be a ROM, a Random Access Memory (RAM), a CD-ROM (Compact Disc Read-Only Memory), a magnetic tape, a floppy disk, an optical data storage device, and the like.

The embodiments of the present disclosure also provide a computer program product, wherein the computer program product includes a computer program that, when executed by a processor, implements the steps of the method described in any one of the foregoing method embodiments.

From the description of the above embodiments, those skilled in the art can clearly understand that the present disclosure may be implemented by means of software plus a necessary general-purpose hardware platform. Based on such understanding, the technical solution of the present disclosure, in essence or the part that contributes to the prior art, may be embodied in the form of a software product, which may be stored in a storage medium, such as ROM/RAM, a magnetic disk, an optical disc, and the like, and includes a number of instructions for causing a computer device (which may be a personal computer, a server, or a network device, etc.) to execute the methods described in the various embodiments or certain parts of the embodiments of the present disclosure.

Each embodiment in this specification is described in a progressive manner, and the same or similar parts among the various embodiments may be referred to each other, with each embodiment focusing on the differences from other embodiments. In particular, for system or system embodiments, since they are basically similar to method embodiments, the description is relatively simple, and the relevant parts may be referred to the partial description of the method embodiments. The systems and system embodiments described above are merely illustrative, and the units described as separate components may or may not be physically separated, and the components shown as units may or may not be physical units, i.e., they may be located in one place or may be distributed over multiple network units. Some or all of the modules may be selected according to actual needs to achieve the purpose of the solution of the present embodiment. Those of ordinary skill in the art can understand and implement the same without inventive effort.

The intelligent interaction method and electronic device provided by the present disclosure have been described in detail above. Specific examples have been used herein to explain the principles and implementations of the present disclosure, and the descriptions of the above embodiments are only intended to help understand the method of the present disclosure and its core idea. At the same time, for those of ordinary skill in the art, based on the idea of the present disclosure, there will be changes in the specific implementation and scope of application. In summary, the content of this specification should not be construed as limiting the present disclosure.

## Claims

1. An intelligent interaction method, wherein the method comprises:
during the display of a current page, detecting a user's current potential shopping need based on at least a function provided by the current page and/or behavior data generated by the user on the current page;
after detecting a target shopping need that the user currently may have, generating prompt text for conducting a dialogue with an artificial intelligence (AI) content generation model based on the target shopping need;
invoking a pre-trained AI content generation model based on the prompt text, so as to generate target content corresponding to the target shopping need and display the target content.

2. The method of claim 1, wherein
the method is applied to an artificial intelligence (AI) interaction module, and the AI interaction module is configured to be embedded into any page.

3. The method of claim 2, wherein
the AI interaction module exists in the form of a software development kit (SDK), so as to embed the AI interaction module into any page via the SDK.

4. The method of claim 2, wherein
the page comprises: pages corresponding to multiple nodes on a shopping guidance chain in a product information service system.

5. The method of claim 2, wherein
the AI interaction module corresponds to a page element for display in a target page, wherein, when the shopping need is not detected, the page element is in a collapsed or hidden state, and after the shopping need is detected, the page element is in an expanded or displayed state, so as to interact with the AI interaction module via the page element.

6. The method of claim 5, further comprising:
after detecting the target shopping need, providing, in the page element of the target page, an operation option for confirming the target shopping need, so that upon receiving a confirmation message from the user, a prompt text for conducting a dialogue with an artificial intelligence AI content generation model is generated based on the target shopping need.

7. The method of claim 6, wherein
the generated prompt text comprises a plurality of prompt texts, and the method further comprises:
providing, in the page element of the target page, an operation option for selecting among multiple prompt texts, so that upon receiving the prompt text selected by the user, an invocation of the AI content generation model is initiated.

8. The method of claim 1, wherein
information used as a basis when detecting a need that the user may currently have further comprises: asset information of the user within a product information service system, marketing campaign information published in the product information service system, marketing campaign information associated with products, and shopping preference information of the user.

9. The method of claim 1, wherein
the function provided by the current page comprises: providing product recommendation information;
the detecting the need that the user may currently have based at least on the function provided by the current page and/or behavior data generated by the user on the current page, comprises:
determining, based on behavior data generated by a user on a page containing a product recommendation information feed, whether the user has a clear target shopping product or a clear target shopping scope, and detecting a need that the user may have based on the determination result.

10. The method of claim 1, wherein
the function provided by the current page comprises: providing product search information;
the detecting the need that the user may currently have based at least on the function provided by the current page and/or behavior data generated by the user on the current page, comprises:
determining, based on product search information entered by the user on the current page, whether the user has a clear target shopping product or a clear target shopping scope, and detecting the need that the user may potentially have based on the determination result.

11. The method of claim 9 or 10, wherein
the detecting the need that the user may have based on the determination result comprises:
if it is determined that the user has a clear target shopping product need, determining the user's target shopping need as product-dimension-based information provision and/or decision-assistance content, so that by generating corresponding prompt text, the AI content generation model generates product-dimension-based information provision and/or decision-assistance content.

12. The method of claim 11, wherein
the product-dimension-based information provision and/or decision-assistance content comprises: comparison among same-model products provided by different merchants across multiple dimensions and/or product recommendation information.

13. The method of claim 9 or 10, wherein
the detecting the need that the user may have based on the determination result comprises:
if it is determined that the user has a clear target shopping scope and the target scope is related to a target scene, determining the user's target shopping need as target-scene-based shopping guidance, so that by generating corresponding prompt text, the AI content generation model generates shopping-list-form product recommendation information aggregated by the target scene.

14. The method of claim 13, wherein
when providing the product recommendation information in the form of a shopping list, the AI content generation model is further configured to generate an ambient background image corresponding to the target scene.

15. The method of claim 9 or 10, wherein
the detecting the need that the user may have based on the determination result comprises:
if it is determined that the user has a clear target shopping scope and the target scope includes multiple different products under a target category, determining the user's target shopping need as purchasing products of the target category or comparing the multiple different products, so that by generating corresponding prompt text, the AI content generation model generates product recommendation information regarding the target category, or, compares the multiple different products across multiple dimensions and/or generates recommendation information.

16. The method of claim 9, wherein
the detecting the need that the user may have based on the determination result comprises:
if it is determined that the user has no clear shopping target, determining based on the user's historical behavior data whether the user has a clear shopping driving factor; if so, determining the user's target shopping need as information related to the shopping driving factor, so that by generating corresponding prompt text, the AI content generation model generates content aggregated by the shopping driving factor.

17. The method of any one of claims 1-16, wherein
the function provided by the current page comprises: providing detailed information about a target product;
the detecting the need that the user may currently have based at least on the function provided by the current page and/or behavior data generated by the user on the current page, comprises:
if the user's dwell time on the current page exceeds a threshold or the user scrolls through multiple screens, but has not performed an operation of adding to the to-be-settled product set or a purchase operation, determining the user's target shopping need as obtaining more comprehensive information about the target product, or obtaining effect information of the target product in a desired usage scene, so that by generating corresponding prompt text, the AI content generation model summarizes the detailed information of the target product and generates summarized text, or, after the user provides a relevant image of the usage scene, generates a usage effect image of simulating the target product into the usage scene.

18. The method of any one of claims 1-17, wherein
the function provided by the current page comprises: providing product list information of products that the user has added to the to-be-settled product set;
the detecting the need that the user may currently have based at least on the function provided by the current page and/or behavior data generated by the user on the current page, comprises:
determining, based on the products in the to-be-settled product set, whether the user has a need to obtain price change information of products in the to-be-settled product set, to add more products to the to-be-settled product set to satisfy the usage conditions of a certain user entitlement, or to obtain associated product recommendations for products in the to-be-settled product set, so that by generating corresponding prompt text, the AI content generation model moves products with price changes to a prominent position on the current page for display, or provides product recommendation information for products that satisfy the usage conditions or belong to associated products.

19. A computer-readable storage medium having a computer program stored thereon, wherein the program, when executed by a processor, implements the steps of the method of any one of claims 1 to 18.

20. An electronic device, comprising:
one or more processors; and
a memory associated with the one or more processors, the memory configured to store program instructions that, when read and executed by the one or more processors, perform the steps of the method of any one of claims 1 to 18.

21. A computer program product, comprising a computer program that, when executed by a processor, implements the steps of the method of any one of claims 1 to 18.
